# DEMANDE DE BREVET EUROPEEN

(11) **EP 1 466 870 A1**
(43) Date de publication de la demande: **13.10.2004**
(21) Numéro de dépôt: 04364031.7
(22) Date de dépôt: 06.04.2004
(51) Int. Cl.: C02F 9/04, A01K 1/01

(54) **Procédé et installation de traitement de déjections animales**

(30) Priorité: 07.04.2003 FR 0304308
(71) Demandeur: OTV SA, 94417 Saint-Maurice Cédex (FR)
(72) Inventeur: Paillard, Hervé, 86340 Vernon (FR); Cigana, John, 78600 Maisons-Lafitte (FR); Meinhold, Jens, 78700 Conflans Saint-Honorine (FR)
(74) Mandataire: Larcher, Dominique

(57) **Abrégé**

L'invention a pour objet un procédé et une installation de traitement de la liqueur mixte provenant d'au moins un bâtiment d'élevage (1) d'animaux domestiques sur caillebotis (2), lesdits caillebotis étant prévus au-dessus d'une zone de récupération (3) des déjections desdits animaux, ledit bâtiment (1) étant pourvu de moyens de lavage (4) par chasses d'eau périodiques de ladite zone de récupération (3) et de moyens d'évacuation (5) de la liqueur mixte constituée par les eaux de lavage et lesdites déjections, caractérisée en ce qu'elle comprend des moyens (6) de séparation de phases de ladite liqueur mixte, des moyens (7) d'acheminement de la phase liquide provenant desdits moyens de séparation vers au moins un bioréacteur (8) associant un traitement biologique et un procédé de filtration et des moyens de recirculation (9) d'au moins une partie de l'effluent épuré provenant dudit bioréacteur (8) vers lesdits moyens de lavage (4).

## Description

L'invention concerne le domaine de la conception et de la réalisation des procédés et installations destinés à traiter les déjections animales recueillies dans les bâtiments d'élevage d'animaux domestiques.

L'invention trouve notamment son application dans le cadre du traitement des lisiers, notamment des lisiers de porc. Toutefois l'invention pourra aussi trouver son application dans le traitement des déjections d'autres animaux d'élevage que les porcs dès lors que ces animaux seront élevés en structures hors-sol.

La présente invention trouve son application pour les bâtiments d'élevage d'animaux domestiques dans lesquels les animaux sont élevés sur des caillebotis prévus au-dessus d'une zone de récupération des déjections de ces animaux. Cette zone de récupération, appelée également pré-fosse, recueille les déjections animales qui doivent ensuite être évacuées de celle-ci.

Il est courant de laisser ces déjections dans ces préfosses pendant un temps relativement long ( jusqu'à plusieurs semaines) avant de les évacuer vers une autre fosse avant de les valoriser par épandage sur des terres agricoles en vue d'amender celles-ci en matières fertilisantes. La stagnation des déjections dans les préfosses génèrent des nuisances, notamment olfactives, très importantes.

Une technique relativement récente, dite du lisier frais, consiste à procéder plus fréquemment au lavage de ces pré-fosses par chasses d'eau en utilisant de l'eau du réseau. La liqueur mixte constituée par le mélange des déjections et de l'eau de lavage est évacuée vers une fosse extérieure au bâtiment où elles subissent une longue fermentation anaérobie afin de pouvoir ensuite être valorisées dans l'agriculture sous forme d'épandage. C'est plus précisément à ce type de technique que se rapporte l'invention.

D'une façon générale, les élevages d'animaux domestiques en espaces clos et notamment les porcheries industrielles, génèrent des composés malodorants constituant des nuisances pour les personnes travaillant dans ces élevages, pour les personnes vivant à proximité de ceux-ci et également pour les animaux élevés dans ceux-ci.

En effet, ces déjections fermentent dans les pré-fosses et émettent des composés gazeux nauséabonds qui sont entraînés par les flux d'air créés par les moyens de ventilation de l'élevage. De mauvaises odeurs émanent aussi des fosses de récupération des déjections provenant de ces pré-fosses qui bien que souvent couvertes, n'empêchent pas leur émanation.

Ces nuisances olfactives se retrouvent lors de la valorisation agricole des lisiers qui sont épandus sur les terres agricoles. Même après enfouissement, ces nuisances olfactives peuvent être importantes, surtout au cours des périodes estivales.

Outre les nuisances olfactives, provoquées notamment par certains composés soufrés, les déjections animales peuvent émettre des composés moins odorants tels que l'ammoniac, qui contribuent d'une part à l'effet de serre et qui d'autre part sont une source d'irritation et un danger potentiel pour la santé humaine et animale.

Les épandages de ces déjections fermentées peuvent aussi impliquer des problèmes liés à l'apport trop important des matières organiques sur les sols et notamment d'azote et, à un degré moindre, de phosphore, de potassium, de métaux lourds. Ils peuvent également engendrer des risques microbiens dans certains cas.

Lorsque les surfaces d'épandage disponibles sont insuffisantes, la valorisation agronomiques des lisiers devient difficile. Les éléments fertilisants distribués sur les terres peuvent se retrouver en excès dans celles-ci et polluer le milieu naturel.
- surfertilisation azotée entraînant la pollution des nappes phréatiques par la percolation des nitrates ;
- eutrophisation des eaux de surface (cours d'eau et zones littorales) due à l'azote et au phosphore ;
- pollution olfactive ;
- pollution bactérienne et antibiorésistance
- accumulation de métaux lourds dans les sols.

Ces excédents sont rencontrés dans toutes les régions ayant de grands élevages hors-sol ou concentrant de nombreux élevages dans de petits périmètres.

Dans les régions à forte concentration, ces excédents sont appelés Excédent Structurel et la zone géographique, Zone d'Excédent Structurel (ZES). Ces zones concernent des régions telles que la Bretagne, la Catalogne, l'Allemagne du nord, mais aussi des pays entiers tels que le Danemark et les Pays-Bas.

Différents moyens sont envisageables pour prévenir et réduire les pollutions dues aux effluents d'élevages en ZES tels que :
- la réduction (qualitative et quantitative) des rejets en modifiant l'alimentation (usage de phytase, alimentation biphasée, réduction des quantités de Cu, Zn et antibiotiques ingérées...) et en réduisant les gaspillages d'eau,
- l'amélioration de la valorisation agronomique (enfouissement direct des matières épandues pour limiter les nuisances olfactives, exportation sur d'autres sites...).

Toutefois, lorsque de telles mesures sont insuffisantes, il devient indispensable de traiter les déjections animales pour permettre une gestion respectueuse de l'environnement.

De très nombreux procédés ont déjà été proposés dans l'état de la technique pour traiter de telles déjections d'animaux domestiques et notamment les lisiers de porc.

Ces traitements peuvent inclure une méthanisation, procédé de fermentation anaérobie contrôlée par des bactéries méthanogènes qui permet de désodoriser le lisier, de réduire la masse de sa phase solide et de produire un gaz combustible, le biogaz, qui peut alimenter une chaudière ou une unité de cogénération. La chaudière produit de l'énergie calorifique pour chauffer le méthaniseur à 35°C (en mode mésophile) mais aussi toute autre installation dans le traitement du lisier. L'intérêt d'une unité de cogénération est de réaliser des économies sur le poste « énergie » dans la filière de traitement. Le surplus de biogaz peut servir à produire de l'électricité ou être brûlé dans une torchère.

Ce procédé épuratoire permet l'élimination d'une fraction de la matière organique mais n'a pratiquement aucun effet sur les pollutions azotée et phosphorée. Les lisiers doivent alors subir un traitement complémentaire pour pouvoir éliminer ces deux formes de pollution.

On a également proposé de traiter le lisier par oxydation par voie humide, technique qui consiste à mettre en contact un effluent avec un gaz oxydant. La réaction d'oxydation se produit sous pression (20 à 200 bars) pour maintenir l'effluent en phase aqueuse et à température élevée(150 à 300°C). L'OVH peut conduire à une minéralisation de l'ordre de 80% de la matière organique aboutissant à la formation de CO₂ et de H₂O ; les 20% restants sont solubilisés en composés organiques de bonne dégradabilité (acide gras, alcool...). L'azote et le phosphore ne sont pas traités. De plus, dans le cas du lisier, la présence importante de chlorure (> 500 mg Cl /l) provoque la corrosion rapide de l'acier de la cuve d'oxydation. Il est nécessaire d'installer une cuve spéciale (titane ou résine...). Cette modification accroît le coût de l'OVH qui est au départ déjà élevé en raison de sa consommation énergétique. Ce procédé, fonctionnant bien pour les boues urbaines, ne semble pas adapté techniquement et économiquement au traitement du lisier de porc.

On a également procédé à des traitements biologiques permettant d'éliminer l'azote ammoniacal et une faible partie de l'azote organique et le phosphore contenu dans les lisiers, en faisant passer le lisier dans un réacteur biologique contenant des boues activées pouvant fonctionner avec des phases aérobie ou anaérobie ou anoxie.

D'autres techniques proposent d'extraire des concentrés d'écoulement de la phase liquide du lisier en effectuant une séparation mécanique et en traitant la phase liquide obtenue dans un réacteur de boues activées.

On connaît aussi un procédé de séchage thermique du lisier utilisant la compression mécanique de vapeur selon lequel le lisier est chauffé pour être récupéré sous forme de poudre, procédé qui nécessite une forte consommation énergétique.

On citera également les procédés d'évapo-concentration qui présentent également l'inconvénient d'impliquer une consommation d'énergie élevée.

Enfin on connaît également dans l'état de la technique, un procédé "SMELOX" consistant à oxyder l'ammoniaque par les Nox en phase liquide. Ce procédé présente l'inconvénient de ne permettre qu'un traitement incomplet puisqu'il n'autorise pas le traitement du phosphore et du potassium.

En ce qui concerne le traitement des gaz provenant des déjections, il est connu de traiter l'ammoniac extrait par lavage acide avec de l'acide sulfurique dans une tour acide ou d'effectuer un lavage oxydant et basique de l'air qui permet d'éliminer les produits soufrés. Ces techniques présentent toutefois l'inconvénient de mettre en oeuvre des réactifs puissants qui peuvent présenter des dangers de manipulation. On a également proposé d'effectuer une combustion catalytique de l'azote ammoniacal à haute température. Le coût de cette technique est toutefois relativement élevé.

L'objectif de la présente invention est de proposer un procédé et une installation de traitement de déjections d'animaux d'élevage permettant de réduire au sein des bâtiments d'élevage et de leur entourage les nuisances olfactives générées par ceux-ci et d'autre part de transformer ces déjections animales en des sous-produits soit recyclables soit pouvant être rejetés dans le milieu naturel sans présenter de risques pour celui-ci.

Notamment, un des objectifs du procédé et de l'installation selon l'invention est de réduire de façon très importante la pollution carbonée et azotée contenue dans les déjections animales.

Encore un autre objectif de la présente invention est de proposer un tel procédé et une telle installation permettant de faciliter le travail des personnels d'élevage.

Egalement, un objectif de l'invention est de proposer une technique qui implique une emprise au sol plus faible que les techniques de l'art antérieur.

Enfin, un objectif de l'invention est également de proposer une technologie qui permette de faire des économies sur les coûts de transport des déjections au moment des épandages.

Ces différents objectifs sont atteints grâce à l'invention qui concerne un procédé de traitement de la liqueur mixte provenant d'au moins un bâtiment d'élevage d'animaux domestiques sur caillebotis, lesdits caillebotis étant prévus au-dessus d'une zone de récupération des déjections desdits animaux, ladite liqueur mixte étant constituée par les eaux de lavage utilisées pour évacuer périodiquement par chasses les déjections recueillies dans ladite zone de récupération et par lesdites déjections,
caractérisé en ce qu'il comprend les étapes consistant à faire subir à ladite liqueur mixte au moins une étape de séparation de phase conduisant à l'obtention d'une phase liquide et d'une première phase solide, à faire subir à ladite phase liquide une épuration par passage dans au moins un bioréacteur associant un traitement biologique et un procédé de filtration, conduisant à un effluent épuré et à une seconde phase solide, et à utiliser au moins une partie dudit effluent épuré pour constituer au moins une partie desdites eaux de lavage.

Le bioréacteur associant un traitement biologique et un procédé de filtration pourra être constitué par un bioréacteur à membranes mais aussi par tout type de biofiltre tel qu'un filtre biologique de type BIOSTYR (décrit dans EP 0 347 296) ou de type filtre à sable à lavage en continu. Ainsi, ladite étape consistant à faire subir à ladite phase liquide une épuration par passage dans au moins un bioréacteur associant un traitement biologique et un procédé de filtration peut consister à faire transiter cette phase dans au moins un bioréacteur à membranes et/ou au moins un bioréacteur intégrant de moyens de filtration granulaires.

La présente invention propose donc de combiner la technique de lavage des pré-fosses de bâtiments d'élevage par la technique de chasse d'eau (« flush » en anglais), technique qui permet d'évacuer périodiquement le lisier frais se trouvant dans ces pré-fosses.

L'invention permet ainsi de diminuer l'émanation d'odeurs nauséabondes résultant de ces déjections. Le traitement biologique de filtration permet d'abattre fortement la pollution carbonée, azotée, phosphorée de ces déjections et d'obtenir :
- d'une part un produit solide déjà partiellement hygiénisé et dont l'hygiénisation pourra être complétée facilement ; et,
- un effluent liquide épuré, partiellement hygiénisé et débarrassé de quasiment toute matière en suspension, effluent réutilisable, au moins en partie, en tant qu'eau de lavage pour les chasses d'eau utilisées pour laver les pré-fosses.

La présente invention propose donc une combinaison synergique de ces différents moyens, aboutissant à une technologie permettant d'optimiser la technique de lavage de lisiers frais par chasses d'eau et d'autoriser des économies d'eau importantes dans le cadre de la mise en oeuvre de cette technique.

En effet, jusqu'ici, comme indiqué déjà ci-dessus, les chasses d'eau étaient utilisées avec de l'eau du réseau.

Comme indiqué ci-dessus, le procédé selon l'invention nécessite une séparation de phases de la liqueur mixte en une phase solide et une phase liquide. Cette étape de séparation de phases pourra être effectuée de plusieurs façons. D'une façon préférentielle, elle sera effectuée sous forme d'une centrifugation. Toutefois, on notera que, en fonction des caractéristiques physico-chimiques de la liqueur mixte, on pourra envisager d'autres façon d'effectuer ladite étape de séparation de phase. Ainsi, on pourra mettre en oeuvre un simple tamisage de cette liqueur mixte ou une filtration sur filtre à plateau ou à bandes ou par presses à vis.

L'étape de passage dans le bioréacteur pourra quant à elle être précédée d'une étape de préfiltration de la phase liquide de façon à limiter l'encrassement des moyens de filtration du bioréacteur.

On notera également que l'étape de passage dans ce bioréacteur à membranes de la phase liquide pourra inclure une phase aérée et une phase non aérée afin d'organiser la nitrification et la dénitrification de cet effluent et parfaire ainsi l'abattement de la pollution azotée.

La phase solide provenant de l'étape de séparation de phase de la liqueur mixte et la phase solide provenant du bioréacteur à membranes pourront subir différents types de traitement pour les rendre inoffensifs pour l'environnement.

Toutefois, préférentiellement, ces phases solides subiront une étape de compostage, processus basé sur la décomposition des matières organiques en présence d'oxygène, grâce aux micro-organismes, conduisant à un produit organique stabilisé qui est à la fois hygiénique et riche en humus. Ce processus, qui prend normalement plusieurs mois, peut être accéléré et contrôlé par diverses techniques.

Bien sûr, il sera généralement nécessaire de prévoir différentes étapes de stockage de la liqueur mixte et/ou de la phase liquide séparée lors de l'étape de séparation de phases au cours du procédé. Ainsi, préférentiellement le procédé inclura une étape de stockage de la liqueur mixte provenant du bâtiment d'élevage et/ou une étape de stockage de la phase liquide provenant de l'étape de séparation de phase et/ou une étape de stockage de l'effluent épuré.

L'invention concerne également une installation pour la mise en oeuvre du procédé tel que décrit ci-dessus, installation destinée au traitement de la liqueur mixte provenant d'au moins un bâtiment d'élevage d'animaux domestiques sur caillebotis, lesdits caillebotis étant prévus au-dessus d'une zone de récupération des déjections desdits animaux, ledit bâtiment étant pourvu de moyens de lavage par chasses d'eau périodiques de ladite zone de récupération et de moyens d'évacuation de la liqueur mixte constituée par les eaux de lavage et lesdites déjections.

Le bioréacteur utilisé pourra être un bioréacteur à membranes ou tout autre type de bioréacteur intégrant des moyens de filtration granulaires (sables, billes de matériau expansé...)

Préférentiellement, lesdits moyens de séparation de phases incluent au moins une centrifugeuse,

Egalement préférentiellement, l'installation selon l'invention inclut au moins un pré-filtre prévu en amont du bioréacteur.

Egalement préférentiellement, l'installation comprend des moyens de compostage des phases solides provenant desdits moyens de séparation de phases et dudit bioréacteur.

Avantageusement, l'installation comprend au moins une zone de stockage de la liqueur mixte provenant dudit bâtiment, au moins un bassin tampon prévu entre les moyens de séparation de phase et ledit bioréacteur et au moins une zone de stockage de l'effluent épuré dans ledit bioréacteur.

Lorsque le bioréacteur sera un bioréacteur à membranes, on pourra utiliser différents types de membrane selon la nature et les caractéristiques physico-chimiques de la liqueur mixte traitée.

Toutefois, selon une variante préférentielle, ces membranes présenteront un pouvoir de coupure compris entre 0,01 µm et 1 µm, de façon préférée entre toutes, compris entre 0,1 µm et 0,4 µm.

L'invention, ainsi que différents avantages qu'elle présente, seront plus facilement compris grâce à la description qui va suivre d'un mode non limitatif de réalisation de celle-ci donné en référence aux figures 1 à 3 dans lesquelles :
- la figure 1 représente un schéma d'une installation selon la présente invention ;
- la figure 2 représente un graphique représentatif de l'abattement de la demande chimique en oxygène (DCO) autorisé par l'invention dans le cadre du traitement de lisier de porc ;
- la figure 3 représente un graphique représentatif de l'abattement de l'azote ammoniacal (NH₄) autorisé par l'invention dans le cadre du traitement de lisier de porc.

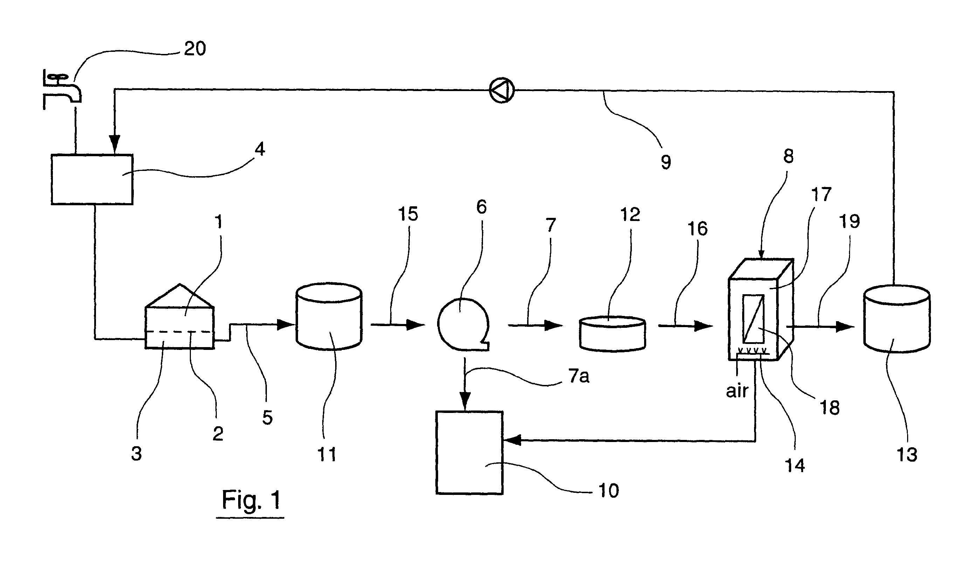

En référence à la figure 1, un bâtiment d'élevage 1 permet l'élevage de porcs sur des caillebotis 2 aménagés au-dessus d'une zone 3 de récupération des déjections (urine + fèces) de ces porcs. Ce lisier présent dans la zone de récupération 3 (« pré-fosse ») est périodiquement évacué de cette zone grâce à des moyens de lavage 4 conçus pour dispenser de façon périodique des chasses d'eau dans cette zone et ainsi refluer les déjections qu'elles contiennent vers une zone de stockage 11 (« fosse ») qui recueille la liqueur mixte constituée par ces eaux de lavage et le lisier frais.

Conformément à la présente invention, cette liqueur mixte est acheminée par des moyens appropriés 15 vers des moyens 6 de séparation de phases qui, en l'occurrence, sont constitués par une centrifugeuse.

Cette centrifugeuse permet de séparer cette liqueur mixte entre une phase liquide et une phase solide. La phase liquide est dirigée grâce à des moyens d'acheminement 7 vers un bassin tampon 12. La phase solide est dirigée grâce à des moyens d'acheminement 7a vers une unité de compostage 10.

La phase liquide stockée dans le bassin tampon 12 est dirigée par des moyens d'acheminement 16 vers un bioréacteur 8. Dans le cadre du présent mode de réalisation, le bioréacteur est un réacteur BIOSEP (marque déposée) fabriqué par la demanderesse. On notera que, dans d'autres modes de réalisation que celui ici décrit à titre d'exemple, on pourra utiliser d'autres types de bioréacteurs munis de moyens de filtration, par exemple un ou plusieurs BIOSTYR ou un plusieurs filtres biologiques à sable à lavage continu.

Ce bioréacteur met en oeuvre un bassin biologique 17 pourvu de moyens d'aération 14 dans lequel sont placés verticalement des modules membranaires 18.

Dans ce type de bioréacteur, chaque module membranaire est constitué d'un cadre qui maintient les membranes sans les confiner dans un carter sous pression. Le bassin 17 constitue un réacteur biologique dont la biomasse permet d'abattre la pollution carbonée, azotée et phosphorée de l'effluent.

On notera que les moyens d'aération 14 pourront être mise en oeuvre pour ménager des phases d'aération des phases de non aération au sein du réacteur et ainsi permettant une dégradation encore meilleure de la pollution azotée par alternance de phases de nitrification et de dénitrification.

L'effluent filtré à travers les membranes et ainsi épuré est évacué du bioréacteur à membranes 8 par des moyens d'évacuation 19 vers une zone de stockage 13 de courte durée. Cet effluent épuré est, conformément à la présente invention, réacheminé vers les moyens de lavage 4 grâce à des moyens de circulation 9. Ces eaux traitées peuvent être stockées dans ces moyens 4 si nécessaire.

Les eaux de lavage de la zone 3 sont ainsi constituées essentiellement par l'effluent épuré et par une petite partie d'eau provenant du réseau 20.

La présente invention permet ainsi d'effectuer de grosses économies d'eau par rapport à des chasses d'eau journalières produites a vec de l'eau de distribution (eau potable,...)

L'invention permet également d'obtenir un abattement très important de la pollution carbonée et de la pollution azotée de la liqueur mixte.

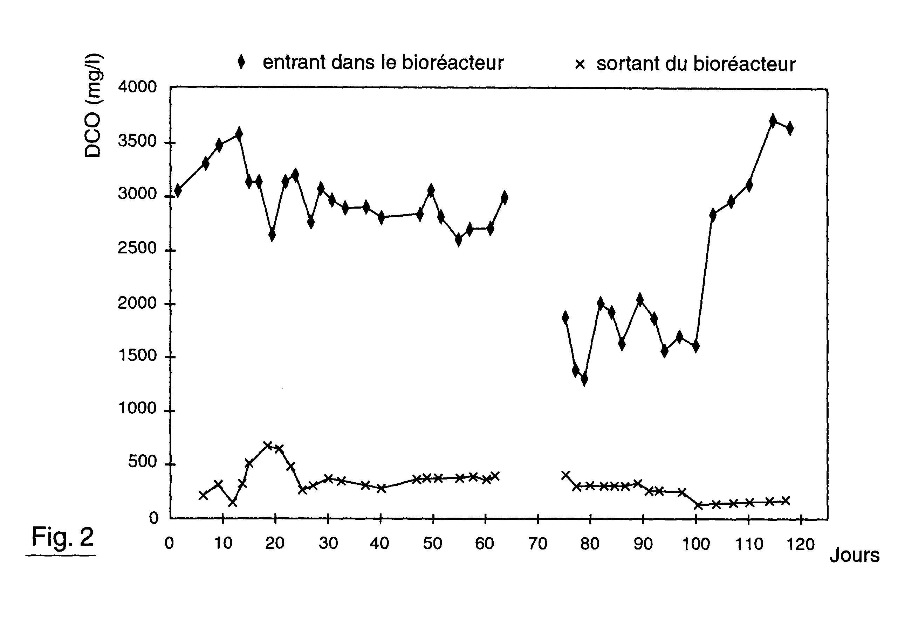

En référence à la figure 2, l'abattement de la pollution carbonée est représenté. La courbe selon cette figure, qui reprend les valeurs figurant au tableau 1 ci-après, indique l'évolution de la DCO en milligrammes par litre dans le temps sur la phase liquide entrant dans le bioréacteur (voir courbe avec losanges) et sur le liquide épuré sortant du bioréacteur (voir courbe avec croix).

**Tableau 1**

| date | jours | Alimentation | Sortie |
|---|---|---|---|
| 28-mar | 1 | 3000 | |
| 02-avr | 6 | 3264 | 182 |
| 05-avr | 9 | 3456 | 278 |
| 08-avr | 12 | 3552 | 134 |
| 10-avr | 14 | 3072 | 307,2 |
| 12-avr | 16 | 3072 | 518 |
| 15-avr | 19 | 2592 | 653 |
| 17-avr | 21 | 3072 | 624 |
| 19-avr | 23 | 3120 | 480 |
| 22-avr | 26 | 2686 | 240 |
| 24-avr | 28 | 3024 | 298 |
| 26-avr | 30 | 2928 | 375 |
| 29-avr | 33 | 2880 | 355 |
| 03-mai | 37 | 2880 | 307 |
| 06-mai | 40 | 2736 | 264 |
| 13-mai | 47 | 2784 | 374,4 |
| 15-mai | 49 | 3824 | 403,2 |
| 17-mai | 51 | 2784 | 388 |
| 21-mai | 55 | 2592 | 393 |
| 24-mai | 58 | 2885 | 400 |
| 27-mai | 61 | 2885 | 354 |
| 29-mai | 63 | 2976 | 408 |
| 31-mai | 65 | | |
| 1-juin | 66 | | |
| 2-juin | 67 | | |
| 3-juin | 68 | | |
| 4-juin | 69 | | |
| 5-juin | 71 | | |
| 6-juin | 75 | 1872 | 365 |
| 10-juin | 77 | 1368 | 240 |
| 12-juin | 79 | 1296 | 240 |
| 14-juin | 82 | 1992 | 245 |
| 17-juin | 84 | 1896 | 259,2 |
| 19-juin | 86 | 1500 | 240 |
| 21-juin | 89 | 2016 | 278 |
| 24-juin | 91 | 1824 | 211,2 |
| 26-juin | 93 | 1536 | 211 |
| 28-juin | 97 | 1680 | 182 |
| 2-juil | 100 | 1608 | 61,6 |
| 5-juil | 103 | 2832 | 105,6 |
| 8-juil | 107 | 2832 | 110,4 |
| 12-juil | 110 | 3072 | 134,4 |
| 15-juil | 114 | 3700 | 134 |
| 22-juil | 117 | 3648 | 144 |

La figure 2 indique clairement que l'abattement de la DCO autorisé par les moyens selon l'invention est très important.

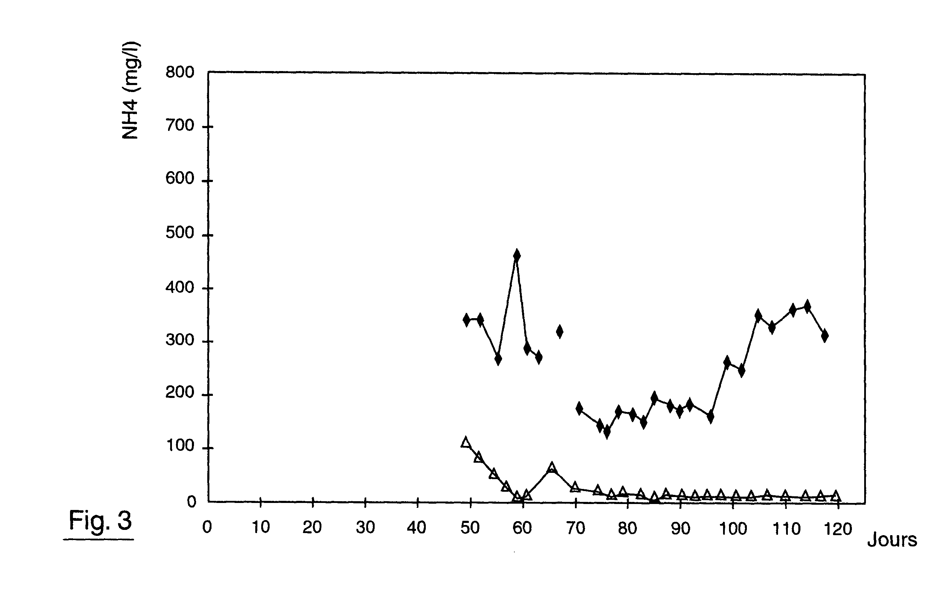

En référence à la figure 3, la pollution azotée est également abattue de façon importante grâce à l'invention. Sur cette figure 3, qui reprend les valeurs figurant au tableau 2 ci-après, la concentration en azote ammoniacal de la phase liquide entrant dans le bioréacteur est indiquée sur la courbe avec les losanges, tandis que cette concentration en sortie du bioréacteur dans l'effluent épuré est indiquée sur la courbe avec des triangles.

**Tableau 2.**

| date | jours | Alimentation | | Sortie |
|---|---|---|---|---|
| 15-mai | 49 | 342 | | 108 |
| 17-mai | 51 | 342 | | 90 |
| 21-mai | 55 | 270 | | 54 |
| 24-mai | 58 | 461 | | 21,6 |
| 27-mai | 61 | 295 | | 7,2 |
| 29-mai | 63 | 288 | | 9 |
| 31-mai | 65 | | | |
| 1-juin | 66 | | | |
| 2-juin | 67 | | | |
| 3-juin | 68 | 313,2 | | 57,6 |
| 4-juin | 69 | | | |
| 6-juin | 71 | 176,4 | | 18 |
| 10-juin | 75 | 154 | | 14,4 |
| 12-juin | 77 | 146,88 | | 5,76 |
| 14-juin | 79 | 175,68 | | 10 |
| 17-juin | 82 | 168,48 | | 7,2 |
| 19-juin | 84 | 158,4 | | 5,76 |
| 21-juin | 86 | 198,7 | | 7,2 |
| 24-juin | 89 | 187,2 | | 5,76 |
| 26-juin | 91 | 182,8 | | 5,7 |
| 28-juin | 93 | 190 | | 5,7 |
| 2-juil | 97 | 171,4 | | 4,32 |
| 5-juil | 100 | 270 | | 4,32 |
| 8-juil | 103 | 257,76 | | 2,88 |
| 12-juil | 107 | 340 | | 2,5 |
| 15-juil | 110 | 322,56 | | 2,16 |
| 19-juil | 114 | 354 | | 2,8 |
| 22-juil | 117 | 361 | | 2,16 |
| 24-juil | 119 | 310 | | 2,52 |

La figure 3 montre également un abattement très important de la pollution ammoniacale.

Le mode de réalisation de l'invention ainsi décrit n'a pas pour objet de réduire la portée de celle-ci. En conséquence, il pourra y être apporté de nombreuses modifications sans sortir de son cadre.

Notamment, comme déjà mentionné, l'invention pourra être utilisée pour traiter des déjections d'autres animaux que les porcs.

## Revendications

1. Procédé de traitement de la liqueur mixte provenant d'au moins un bâtiment d'élevage d'animaux domestiques sur caillebotis, lesdits caillebotis étant prévus au-dessus d'une zone de récupération des déjections desdits animaux, ladite liqueur mixte étant constituée par les eaux de lavage utilisées pour évacuer périodiquement par chasses les déjections recueillies dans ladite zone de récupération et par lesdites déjections,
**caractérisé en ce qu'**il comprend les étapes consistant à faire subir à ladite liqueur mixte au moins une étape de séparation de phase conduisant à l'obtention d'une phase liquide et d'une première phase solide, à faire subir à ladite phase liquide une épuration par passage dans au moins un bioréacteur associant un traitement biologique et un procédé de filtration conduisant à un effluent épuré et à une seconde phase solide, et à utiliser au moins une partie dudit effluent épuré pour constituer au moins une partie desdites eaux de lavage.

2. Procédé selon la revendication 1 **caractérisé en ce que** ladite étape de séparation de phases comprend une centrifugation.

3. Procédé selon l'une quelconque des revendications 1 ou 2 **caractérisé en ce qu'**il inclut une étape de préfiltration effectuée avant ladite étape d'épuration par passage dans au moins un bioréacteur.

4. Procédé selon l'une quelconque des revendications 1 à 3 **caractérisé en ce que** ladite étape de passage dans ledit bioréacteur comprend au moins une phase aérée et au moins une phase non aérée.

5. Procédé selon l'une quelconque des revendications 5 à 4 **caractérisé en ce qu'**il comprend une étape de compostage de ladite première phase solide et/ou de ladite seconde phase solide.

6. Procédé selon l'une quelconque des revendications 1 à 5 **caractérisé en ce qu'**il comprend une étape de stockage de la liqueur mixte provenant dudit bâtiment et/ou une étape de stockage de la phase liquide provenant de ladite étape de séparation de phases et/ou une étape de stockage de l'effluent épuré.

7. Procédé selon l'une quelconque des revendications 1 à 6 **caractérisé en ce que** ladite étape consistant à faire subir à ladite phase liquide une épuration par passage dans au moins un bioréacteur associant un traitement biologique et un procédé de filtration consite à faire transiter cette phase dans au moins un bioréacteur à membranes et/ou au moins un bioréacteur intégrant de moyens de filtration granulaire.

8. Installation de traitement de la liqueur mixte provenant d'au moins un bâtiment d'élevage (1) d'animaux domestiques sur caillebotis (2), lesdits caillebotis étant prévus au-dessus d'une zone de récupération (3) des déjections desdits animaux, ledit bâtiment (1) étant pourvu de moyens de lavage (4) par chasses d'eau périodiques de ladite zone de récupération (3) et de moyens d'évacuation (5) de la liqueur mixte constituée par les eaux de lavage et lesdites déjections,
**caractérisée en ce qu'**elle comprend des moyens (6) de séparation de phases de ladite liqueur mixte, des moyens (7) d'acheminement de la phase liquide provenant desdits moyens de séparation vers au moins un bioréacteur (8) pourvu de moyens de filtration et des moyens de recirculation (9) d'au moins une partie de l'effluent épuré provenant dudit bioréacteur (8) vers lesdits moyens de lavage (4).

9. Installation selon la revendication 8 **caractérisée en ce que** ledit bioréacteur est un bioréacteur à membranes ou un bioréacteur intégrant de moyens de filtration granulaire.

10. Installation selon la revendication 8 ou 9 **caractérisée en ce que** lesdits moyens de séparation de phases (6) incluent au moins une centrifugeuse.

11. Installation selon l'une quelconque des revendications 7 à 10 **caractérisée en ce qu'**elle inclut au moins un préfiltre prévu en amont dudit bioréacteur (8)

12. Installation selon l'une quelconque des revendications 7 à 11 **caractérisée en ce qu'**elle comprend des moyens de compostage (10) des phases solides provenant desdits moyens (6) de séparation de phase et dudit bioréacteur (8).

13. Installation selon l'une quelconque des revendications 7 à 12 **caractérisée en ce qu'**elle comprend au moins une zone de stockage (11) de la liqueur mixte provenant dudit bâtiment (1), au moins un bassin tampon (12) prévu entre les moyens de séparation de phase (6) et ledit bioréacteur (8) et au moins une zone de stockage (13) de l'effluent épuré dans ledit bioréacteur (8).

14. Installation selon l'une quelconque des revendications 7 à 13 **caractérisée en ce que** ledit bioréacteur est un bioréacteur à membranes (8) dont les membranes présentent un pouvoir de coupure compris entre 0,01 µm et 1 µm.

15. Installation selon la revendication 14 **caractérisée en ce que** lesdites membranes dont les membranes présentent un pouvoir de coupure compris entre 0,01 µm et 0,4 µm.
